# DEMANDE DE BREVET EUROPEEN

(11) **EP 4 495 585 A1**
(43) Date de publication de la demande: **22.01.2025**
(21) Numéro de dépôt: 24186182.2
(22) Date de dépôt: 03.07.2024
(51) Int. Cl.: G01N 21/91

(54) **PROCÉDÉ DE CONTRÔLE PERMETTANT DE DÉTECTER AU MOINS UN DÉFAUT DÉBOUCHANT PRÉSENT EN SURFACE D'UNE PIÈCE MÉCANIQUE POUR AÉRONEF**

(30) Priorité: 18.07.2023 FR 2307682
(71) Demandeur: Safran Helicopter Engines, 64510 Bordes (FR)
(72) Inventeur: DUMESTRE-COURTIADE, Thierry Christian Elie, 77550 MOISSY-CRAMAYEL (FR); MALO, Patrice André Marcel, 77550 MOISSY-CRAMAYEL (FR); SOULE, Jean-Alain, 77550 MOISSY-CRAMAYEL (FR); GUAZZONE, Laurent Jean-Pascal, 77550 MOISSY-CRAMAYEL (FR)
(74) Mandataire: Germain Maureau

(57) **Abrégé**

Il est décrit un procédé de contrôle non destructif permettant de détecter au moins un défaut (12) débouchant formant au moins une discontinuité présente en surface d'une pièce mécanique (10) pour aéronef, le procédé comprenant les étapes suivantes :
- application (E1) d'un produit en phase liquide sur la pièce mécanique (10),
- contrôle optique (E2) par un appareil d'acquisition d'images, durant une durée de contrôle (Δt) au cours de laquelle tout ou partie du produit précédemment appliqué s'évapore, d'au moins une zone de contrôle (Z) de la pièce mécanique (10), l'appareil d'acquisition d'images délivrant des données représentatives de l'évolution, durant la durée de contrôle (Δt), de l'apparence optique de la zone de contrôle (Z) surveillée,
- analyse (E3) des données précédemment délivrées par l'appareil d'acquisition d'images.

## Description

### Domaine technique de l'invention

La présente invention concerne un procédé de contrôle non destructif permettant de détecter au moins un défaut débouchant formant au moins une discontinuité présente en surface d'une pièce mécanique pour aéronef. Dans le contexte de l'invention, un tel défaut débouchant est traversant à travers l'épaisseur locale de la pièce, et peut avoir une forme d'un simple trou localisé, d'une crique, d'une porosité, d'une fente, d'une fissure, ou tout autre type d'anfractuosité provenant d'un éventuel défaut de fabrication ou d'une usure après un temps de fonctionnement de la pièce mécanique.

### Etat de la technique

Les produits de l'industrie doivent aujourd'hui répondre à la fois à des critères de qualité exigeants tout en restant économiquement les plus compétitifs possibles. Cet optimal vise le meilleur équilibre entre l'utilisation de technologies de fabrication poussées pour produire un produit directement de bonne qualité et exploitable et l'utilisation en aval de moyens d'évaluation et de contrôle des produits et des matériaux les constituant détectant les éventuelles non-conformités qui resteraient présentes.

Les industries de transformation des métaux suivent ces règles notamment pour les produits appliqués aux transports terrestres, maritimes et aéronautiques, notamment pour maitriser et minimiser les risques d'anomalie, imposant d'autant plus de sévérité compte-tenu de leur impact sur la tenue mécanique et la sécurité finale.

Les méthodes d'évaluation et de contrôle à disposition sont multiples et se divisent en deux catégories : les méthodes d'évaluation destructives et les méthodes d'évaluation non destructives. La première catégorie est généralement utilisée dans les phases de recherche, de développement, voire d'industrialisation, qui n'ont in fine pas vocation à obtenir un produit livrable, à un client utilisateur mais à valider une étape de sa mise au point. Au contraire, la deuxième catégorie de méthodes présente un champ d'application extrêmement large, pouvant intervenir dans des étapes d'élaboration et de conception, ou dans des étapes de fabrication et de production de produits neufs livrables ou encore durant toute phase nécessaire pendant la vie du produit, c'est-à-dire lors d'un suivi du produit en service.

Les contrôles non destructifs constituent un spectre large de mise en oeuvre et l'industrie les utilise dans toutes ces phases dans le but de mesurer des propriétés et de détecter des éventuelles anomalies tout en permettant que ces examens ne nuisent en rien à l'utilisation finale du produit ainsi obtenu.

Plus spécifiquement dans le domaine de pièces entrant dans la constitution de turbomachines pour aéronef, la conception, la fabrication, la vente et le support en service de telles pièces nécessitent d'utiliser un large éventail de ces techniques de contrôle non destructives très souvent en les combinant car aucune technique n'est à elle seule autosuffisante.

Parmi ces techniques, le contrôle ressuage occupe une place prépondérante, un tel contrôle ayant pour but de mettre en avant un défaut débouchant formant au moins une discontinuité présente dans la pièce à contrôler. Un tel défaut débouchant peut être traversant ou non à travers l'épaisseur locale de la pièce, et avoir une forme d'un simple trou, d'une porosité, d'une crique, d'une fente, d'une fissure... Le ressuage est une technique connue depuis de nombreuses années qui peut comprendre classiquement les étapes suivantes :
- dégraissage et éventuel décapage de la surface de la pièce à contrôler,
- application d'un produit pénétrant coloré ayant des caractéristiques adaptées en terme de mouillabilité pour favoriser sa diffusion et son étalement, et en terme de couleur en fonction de la technique d'observation,
- rinçage de l'excédent de pénétrant en surface
- séchage,
- application d'un produit révélateur à la surface de la pièce, permettant de restituer une quantité de pénétrant résiduelle éventuellement localisée au niveau du défaut à révéler et donner une indication colorée visuellement détectable,
- observation circonstanciée, en temps réel ou de manière différée, en adaptant la lumière utilisée (notamment en fonction du pénétrant utilisé : soit sous lumière blanche, soit sous lumière ultraviolet) et l'outil éventuellement utilisé (binoculaire, endoscope, digital ou non, avec enregistrement ou non), en sachant que l'observation peut aussi se faire à l'œil nu.

Facultativement, il est connu de mettre en oeuvre une étape complémentaire entre l'application du produit révélateur et l'observation, permettant une levée de doute, afin de confirmer ou infirmer une indication précédente incertaine. Cette étape complémentaire consiste à appliquer de l'acétone permettant de faire remonter le pénétrant en surface par un mécanisme combiné de capillarité et de dilution. Cette étape de levée de doute est communément désignée sous le terme anglais de « wipe-off ».

Le ressuage se pratique principalement sur une pièce non montée ou isolée, permettant une manipulation aisée. A titre d'exemple, le document FR3082941A1 décrit un exemple d'une technique de manipulation utilisée en ressuage. En complément, il existe des applications permettant de pratiquer le ressuage sur une pièce montée dans un ensemble, voire in-situ et dans des conditions de non accessibilité.

Pour donner des résultats fiables, la technique de contrôle par ressuage est sensible à mettre en oeuvre, voire même complexe, car elle met en jeu certains paramètres clés très influents comme notamment une gamme opérationnelle qui doit être précise avec des temps de réalisation à maîtriser, un matériel utilisé et un étalonnage rigoureux nécessaires, une formation et une certification des agents de contrôle, etc ...

De plus, compte-tenu des nombreuses phases opérationnelles qui sont propres à cette technique et qui ont été décrites ci-dessus, sa mise en oeuvre présente des contraintes substantielles et nécessite un temps de réalisation non négligeable. La technique de ressuage présente en effet l'inconvénient d'être longue à mettre en oeuvre. En effet, elle nécessite d'une part la mise en oeuvre de plusieurs étapes successives, ce qui rend la solution complexe et requérant l'utilisation de plusieurs produits. D'autre part, chacune des étapes est assez lente, par exemple dans l'étape d'application du produit révélateur l'absorption du pénétrant par le révélateur requiert un certain temps dépendant du déplacement du liquide jusqu'en surface de pièce. L'étape d'observation est aussi volontairement assez lente car elle nécessite un soin d'attention élevé de l'opérateur afin de maximiser la détection d'éventuel défaut (que l'analyse se fasse en directe ou de manière ultérieure) et ne revêt aucun caractère dynamique. Au contraire, l'observation est interprétée une fois le phénomène de ressuage établi et achevé, s'apparentant à une observation statique.

Malgré ces contraintes, la capabilité d'évaluation que l'on tire de la technique de ressuage peut encore justifier sa pratique industrielle régulière. D'ailleurs dans certains cas encore plus délicats où éviter le démontage de la pièce de son ensemble complexe permet d'éviter des délais, des coûts et les lourdeurs associées, la technique d'un ressuage localisé in-situ reste utilisée et même si cela exige une mise en oeuvre encore plus spécifique. En effet, pour ce faire, des moyens adaptés sont utilisés permettant non seulement de réaliser les nombreuses phases opérationnelles de ressuage mais aussi l'évaluation finale réalisée grâce à une observation par voie endoscopique dédiée.

Dans ce contexte et face à ces défis, il devenait impératif de fournir un procédé de contrôle non destructif pour des pièces d'aéronef qui puisse être simple et rapide à mettre en oeuvre, tout en étant d'une très grande fiabilité.

### Objet de l'invention

La présente invention a pour but de proposer un procédé de contrôle non destructif permettant de détecter au moins un défaut débouchant formant au moins une discontinuité présente en surface d'une pièce mécanique pour aéronef qui réponde aux problématiques évoquées ci-avant en lien avec les solutions connues.

Notamment, le but de l'invention est de proposer un tel procédé de contrôle qui réponde à au moins l'un des objectifs suivants :
- être économique,
- être simple à mettre en oeuvre,
- donner une grande fiabilité de détection des défauts.

Ce but peut être atteint grâce à la mise en oeuvre d'un procédé de contrôle non destructif permettant de détecter au moins un défaut débouchant formant au moins une discontinuité présente en surface d'une pièce mécanique pour aéronef, le procédé comprenant les étapes suivantes :
- application d'un produit en phase liquide sur la pièce mécanique,
- contrôle optique par un appareil d'acquisition d'images, durant une durée de contrôle au cours de laquelle tout ou partie du produit précédemment appliqué s'évapore, d'au moins une zone de contrôle de la pièce mécanique, l'appareil d'acquisition d'images délivrant des données représentatives de l'évolution, durant la durée de contrôle, de l'apparence optique de la zone de contrôle surveillée,
- analyse des données précédemment délivrées par l'appareil d'acquisition d'images,
procédé dans lequel durant l'étape d'application, le produit en phase liquide est appliqué sur au moins une portion d'une première face d'au moins une partie à contrôler de la pièce mécanique, et durant l'étape de contrôle optique, ladite zone de contrôle appartient à une deuxième face de la partie à contrôler de la pièce mécanique, la première face étant distincte de la deuxième face, la première face et la deuxième face étant deux faces opposées de la pièce mécanique au niveau de la partie à contrôler, lesdites deux faces opposées délimitant l'épaisseur de la pièce mécanique dans la partie à contrôler.

Ce procédé de contrôle présente l'avantage d'être économique, d'être simple à mettre en oeuvre, et de donner une grande fiabilité de détection des défauts. Cela peut favoriser la mise en oeuvre d'une application du produit en phase liquide prolongée dans le temps, éventuellement répétée dans le temps, au moins en partie en même temps que tout ou partie de l'étape de contrôle optique, favorisant une fiabilité de la détection. De plus, cette technique applicable pour le cas de défauts traversants, a pour avantage de permettre une visualisation du défaut de manière immédiate, sans avoir à attendre que les parties dépourvues de défauts ne voient le produit en phase liquide précédemment appliqué ne s'évapore.

Selon une alternative, le contrôle optique peut être réalisé à l'œil nu.

Certains aspects préférés mais non limitatifs de ce procédé de contrôle sont les suivants. Ces aspects peuvent être mis en oeuvre séparément ou de manière combinée.

Selon un mode de réalisation, le procédé de contrôle comprend une étape de génération d'une alerte, déclenchée si le résultat de l'étape d'analyse délivre une information représentative de la suspicion de présence dudit au moins un défaut débouchant présent en surface de la pièce mécanique.

Selon un mode de réalisation, le produit en phase liquide appliqué comprend au moins un solvant organique. Cela présente comme avantage de rendre la solution simple et économique.

Selon un mode de réalisation, le produit en phase liquide appliqué est caractérisé par une tension superficielle inférieure à 40 mN/m, préférentiellement inférieure à 30 mN/m, et notamment inférieure à 25 mN/m. Cela présente comme avantage que le produit en phase liquide utilisé a une très grande mouillabilité et favorise son étalement naturel et rapide sur la surface contrôlée de la pièce.

Selon un mode de réalisation, le produit en phase liquide appliqué à l'étape d'application présente un indice d'évaporation Iₑ relatif à l'éther éthylique selon la norme DIN 53170 inférieur à 3. Un effet technique est qu'il permet un séchage rapide, typiquement inférieur à 1 minute dans les conditions de ladite norme. Cela présente comme avantage que le produit en phase liquide utilisé a une très grande capacité à s'évaporer naturellement et extrêmement rapidement dans des conditions normales ambiantes de pression et de température.

Selon un mode de réalisation, le produit en phase liquide appliqué à l'étape d'application présente un indice d'évaporation I_{ab} relatif à l'acétate de butyle selon la norme ASTM D 3539 supérieur à 1. Un effet technique est qu'il permet un séchage rapide, typiquement inférieur à 1 minute dans les conditions de ladite norme. Cela présente comme avantage que le produit en phase liquide utilisé a une très grande capacité à s'évaporer naturellement et extrêmement rapidement dans des conditions normales ambiantes de pression et de température.

Selon un mode de réalisation, le produit en phase liquide appliqué à l'étape d'application est transparent dans le spectre visible. Cela facilite énormément la mise en oeuvre du procédé de contrôle car il n'est pas nécessaire de prévoir d'étape ultérieure de nettoyage, et en outre, cela présente comme avantage d'éviter tout résidu après séchage.

Selon un mode de réalisation, le produit en phase liquide appliqué à l'étape d'application comprend une cétone. Cela présente comme avantage de faciliter le nettoyage, le dépoussiérage et le dégraissage. Le nettoyage de la surface est une étape qui facilite au final la détection des défauts du fait que les éventuels résidus, après évaporation de la cétone, sont extrêmement faibles.

Selon un mode de réalisation, le produit en phase liquide appliqué à l'étape d'application comprend de l'acétone. Cette caractéristique présente les mêmes avantages que susmentionnés, le tout avec un produit très économique.

Selon un mode de réalisation, la durée de contrôle est comprise entre 0 et 15 secondes, préférentiellement inférieure à 10 secondes, notamment de l'ordre de 7 secondes. Cela favorise avantageusement la rapidité et la facilité de mise en oeuvre du procédé de contrôle, et le rend facilement répétable.

Selon un mode de réalisation, l'étape d'application est mise en oeuvre au moyen d'un dispositif appliquant le produit en phase liquide selon l'une des méthodes suivantes : par projection, par pulvérisation, par dépôt, par trempage.

Selon un mode de réalisation, l'appareil d'acquisition d'images est choisi parmi une loupe binoculaire, un endoscope, un appareil photographique numérique, une caméra, un téléphone.

Selon un mode de réalisation, le procédé de contrôle comprend, préalablement à l'étape d'application, une étape de fourniture de la pièce mécanique dans laquelle la pièce mécanique appartient à une turbomachine et comprend un défaut débouchant préalablement identifié, et le cycle incluant l'étape d'application, l'étape de contrôle optique et l'étape d'analyse est répété périodiquement afin de surveiller dans le temps la propagation dudit défaut débouchant au sein de la pièce mécanique.

Il peut s'agir d'une turbomachine appartenant à un banc d'essai fixe ou montée sur un aéronef en service (sur flotte). Il résulte des dispositions précédentes qu'il est possible, de manière simple, rapide, économique et fiable, de surveiller l'évolution (la propagation) dans le temps d'un défaut débouchant (par exemple une fissure) déjà présent sur la turbomachine.

### Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
La Figure 1 est un ordinogramme représentant les étapes successives d'un procédé de contrôle selon l'invention.
La Figure 2 est une courbe schématique représentant l'évolution dans le temps noté t (en s), pris par le contraste visuel repéré K, dans la zone de contrôle (laquelle inclut un défaut débouchant), durant la durée de contrôle Δt.
La Figure 3 schématise l'apparence optique de la zone de contrôle entre les instants t1 et t2 visibles sur la figure 2.
La figure 4 schématise l'apparence optique de la zone de contrôle entre les instants t2 et t3 visibles sur la figure 2.

### Description détaillée

Sur les figures, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

Le procédé de contrôle non destructif détaillé plus loin permet de détecter au moins un défaut débouchant formant au moins une discontinuité présente en surface d'une pièce mécanique pour aéronef.

Un tel défaut débouchant formant au moins une discontinuité est traversant à travers l'épaisseur locale de la pièce, et peut avoir une forme d'un simple trou localisé, d'une crique, d'une porosité, d'une fente, d'une fissure, ou tout autre type d'anfractuosité provenant d'un éventuel défaut de fabrication ou d'une usure après un temps de fonctionnement de la pièce mécanique.

Le procédé de contrôle non destructif comprend une première étape d'application E1 consistant à appliquer un produit en phase liquide sur la pièce mécanique. Ce produit en phase liquide sera décrit plus loin et peut présenter avantageusement des propriétés précises en terme de mouillabilité et en terme de capacité d'évaporation.

Le procédé de contrôle non destructif comprend aussi une étape de contrôle optique E2 consistant à contrôler optiquement, notamment par un appareil d'acquisition d'images, durant une durée de contrôle Δt au cours de laquelle tout ou partie du produit précédemment appliqué s'évapore, d'au moins une zone de contrôle Z de la pièce mécanique 10, l'appareil d'acquisition d'images délivrant des données représentatives de l'évolution, durant la durée de contrôle Δt, de l'apparence optique de la zone de contrôle Z surveillée.

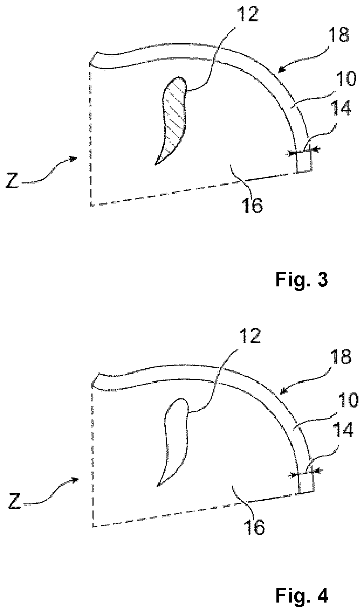

En référence aux figures 3 et 4 il sera expliqué par exemple trois phases successives de l'apparence optique prises par la zone de contrôle Z surveillée de la pièce mécanique 10 durant la durée de contrôle Δt. Pour une bonne compréhension, il est pris comme hypothèse que la pièce mécanique 10 présente, dans la zone de contrôle Z, au moins un défaut 12 débouchant formant au moins une discontinuité. L'épaisseur locale de la pièce mécanique est repérée par la référence 14.

Selon une alternative complémentaire, le contrôle optique peut être réalisé à l'œil nu.

De telles données peuvent par exemple correspondre à chaque pixel de chaque image acquise. Il peut aussi s'agir de données de la perception de l'opérateur.

Le procédé de contrôle non destructif comprend également une étape d'analyse E3 consistant à analyser les données précédemment obtenues à l'étape E2, notamment délivrées par l'appareil d'acquisition d'images.

Une telle analyse peut se faire par exemple par des algorithmes de traitement d'images, consistant par exemple essentiellement à décomposer chaque image acquise en niveaux de gris, ces algorithmes pouvant être mis en oeuvre par une unité de traitement configurée et programmée à cet effet. Cela peut toutefois se faire complémentairement par la perception de l'opérateur si nécessaire.

Cette analyse peut se faire au moins partiellement simultanément avec l'étape de contrôle optique E2, ou éventuellement a posteriori.

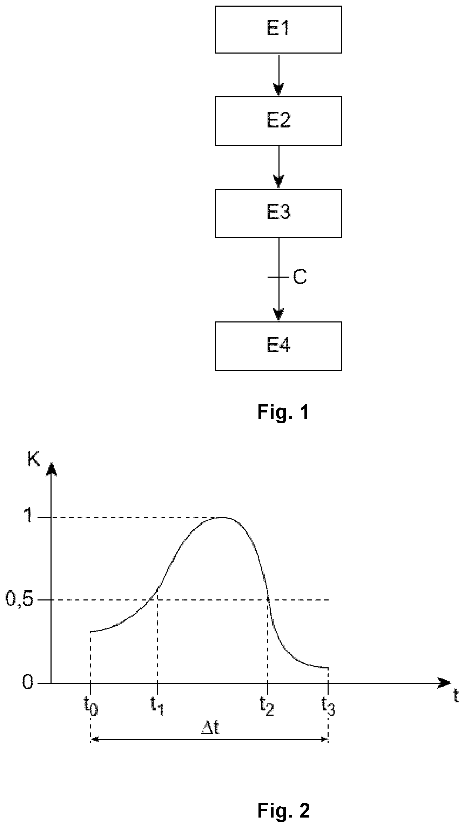

Selon le mode de réalisation non limitatif de la figure 1, le procédé de contrôle non destructif déclenche une étape de génération E4 consistant à générer une alerte si la condition suivante, repérée C sur la figure, est vérifiée : le résultat de l'étape d'analyse E3 délivre une information représentative de la suspicion de présence d'au moins un défaut débouchant formant au moins une discontinuité présente en surface de la pièce mécanique. Si la condition C n'est pas vérifiée, alors le procédé de contrôle non destructif ne signale aucun défaut débouchant.

Une telle alerte peut être de toute nature, comme par exemple un signal sonore, l'édition d'un rapport, ou toute autre forme adaptée aux circonstances de mises en oeuvre du procédé.

Une telle information peut par exemple correspondre à la présence locale d'au moins une image traitée, à un moment donné de la durée de surveillance Δt, d'un niveau de contraste ayant une valeur supérieure à un seuil prédéterminé. L'Homme du métier, par ses connaissances, sait adapter des algorithmes ou des programmes pour arriver à de tels traitements. Sinon, l'opérateur peut aussi traiter et déterminer cette information en complément.

Par les termes « en surface de la pièce mécanique », il est compris que ledit au moins défaut 12 débouchant débouche sur la deuxième face, qui est définie plus loin, de la partie à contrôler de la pièce mécanique 10.

Ce procédé de contrôle présente l'avantage d'être économique, d'être simple à mettre en oeuvre, et de donner une grande fiabilité de détection des défauts débouchants. En effet, le nombre d'étapes est faible, de même que le nombre ou la nature de produit utilisé. De plus chaque étape est très rapide à mettre en oeuvre et économique, ce qui en facilite une éventuelle répétabilité et une mise en oeuvre à grande échelle sur des pièces mécaniques 10 complexes, éventuellement non accessibles et pour des applications in-situ si nécessaire. Au contraire des techniques connues où il devait être identifié la présence de produits colorés localisés, la présente technique se base sur la surveillance de l'évolution dans le temps t de l'apparence optique (notamment sur des critères de contrastes) au sein de la zone de contrôle Z, sous le seul effet de l'évaporation du produit en phase liquide précédemment appliqué, et ce sur une durée de contrôle temporelle Δt très courte pouvant notamment être inférieure à une minute. Il s'agit donc d'une solution simple, rapide, économique et fiable.

Selon un mode de réalisation, durant l'étape d'application, le produit en phase liquide est appliqué sur au moins une portion d'une première face d'au moins une partie à contrôler de la pièce mécanique 10, et durant l'étape de contrôle optique E2, ladite zone de contrôle Z appartient à une deuxième face de la partie à contrôler de la pièce mécanique 10. Cette première face susmentionnée correspond à la face de la pièce mécanique 10 où le produit en phase liquide est appliqué à l'étape E1.

La première face susmentionnée est distincte de la deuxième face, la première face et la deuxième face étant deux faces opposées de la pièce mécanique 10 au niveau de la partie à contrôler, lesdites deux faces opposées délimitant l'épaisseur 14 de la pièce mécanique 10 dans la partie à contrôler. Le produit en phase liquide est appliqué à l'étape E1 sur la face opposée à la face où est réalisé le contrôle optique à l'étape E2. Le produit en phase liquide est appliqué à l'étape E1 sur la face 18 et le contrôle optique est réalisé à l'étape E2 sur la face 16, les faces 16 et 18 étant séparées localement par l'épaisseur 14 déjà mentionnée. Cela peut favoriser la mise en oeuvre d'une application du produit en phase liquide prolongée dans le temps, éventuellement répétée dans le temps, au moins en partie en même temps que tout ou partie de l'étape de contrôle optique E2, favorisant une fiabilité de la détection. De plus, cette technique applicable pour le cas de défauts 12 traversants, a pour avantage de permettre une visualisation du défaut 12 de manière immédiate, sans avoir à attendre que le produit en phase liquide précédemment appliqué présent sur les parties dépourvues de défauts 12 ne s'évapore. Ces dispositions permettent une application dynamique dans le temps du produit en phase liquide sur la première face, permettant de révéler de manière dynamique, et plus aisément, un défaut 12 traversant débouchant à la fois sur les deux faces 16, 18 de la pièce mécanique 10.

Le produit en phase liquide peut être un solvant, par exemple de l'eau, pure ou mélangée avec d'autres solvants. Selon un mode de réalisation, le produit en phase liquide appliqué comprend au moins un solvant organique. Cela présente comme avantage de rendre la solution simple et économique. Il peut y avoir la présence d'un seul solvant organique ou d'un mélange d'une pluralité de solvants organiques, le tout potentiellement mélangé avec de l'eau et d'éventuels additifs.

Selon un mode de réalisation, le produit en phase liquide appliqué est caractérisé par une tension superficielle inférieure à 40 mN/m, préférentiellement inférieure à 30 mN/m, et notamment inférieure à 25 mN/m. La tension superficielle détermine le comportement du produit en phase liquide utilisé en ce qui concerne en particulier la mouillabilité : plus la tension superficielle est faible, plus le mouillage d'un solide (ici la pièce mécanique) par le produit en phase liquide est important. Cela présente comme avantage que le produit en phase liquide utilisé a une très grande mouillabilité et favorise son étalement naturel et rapide sur la surface contrôlée de la pièce mécanique 10.

Selon un mode de réalisation, le produit en phase liquide appliqué à l'étape d'application E1 présente un indice d'évaporation Iₑ relatif à l'éther éthylique selon la norme DIN 53170 inférieur à 3. Un effet technique est qu'il permet un séchage rapide, typiquement inférieur à 1 minute dans les conditions de ladite norme. Cela présente comme avantage que le produit en phase liquide utilisé a une très grande capacité à s'évaporer naturellement et extrêmement rapidement dans des conditions normales ambiantes de pression et de température.

Selon un mode de réalisation, le produit en phase liquide appliqué à l'étape d'application E1 présente un indice d'évaporation I_{ab} relatif à l'acétate de butyle selon la norme ASTM D 3539 supérieur à 1. Un effet technique est qu'il permet un séchage rapide, typiquement inférieur à 1 minute dans les conditions de ladite norme. Cela présente comme avantage que le produit en phase liquide utilisé a une très grande capacité à s'évaporer naturellement et extrêmement rapidement dans des conditions normales ambiantes de pression et de température.

Selon un mode de réalisation, le produit en phase liquide appliqué à l'étape d'application E1 est transparent dans le spectre visible. Cela facilite énormément la mise en oeuvre du procédé de contrôle car il n'est pas nécessaire de prévoir d'étape ultérieure de nettoyage, et en outre, cela présente comme avantage d'éviter la présence de tout résidu après évaporation complète. Il reste toutefois possible d'envisager un produit appliqué à l'étape E1 qui serait non transparent dès lors qu'il présenterait des caractéristiques adaptées de mouillabilité et de capacité d'évaporation.

Selon un mode de réalisation, le produit en phase liquide appliqué à l'étape d'application E1 comprend une cétone. Cela présente comme avantage de faciliter le nettoyage, le dépoussiérage et le dégraissage. Le nettoyage de la deuxième face est une étape qui facilite au final la détection des défauts 12 et le fait que les éventuels résidus, après évaporation de la cétone, sont extrêmement faibles. Il peut y avoir la présence d'une cétone ou d'un mélange d'une pluralité de cétones, le tout potentiellement mélangé avec de l'eau et des éventuels additifs.

Selon un mode de réalisation, le produit en phase liquide appliqué à l'étape d'application comprend de l'acétone. Cette caractéristique présente les mêmes avantages que susmentionnés, le tout avec un produit très économique.

Selon un mode de réalisation, la durée de contrôle est comprise entre 0 et 15 secondes, préférentiellement inférieure à 10 secondes, notamment de l'ordre de 7 secondes. Ces dispositions sont en particulier obtenues grâce à l'acétone d'après les essais qui ont été réalisés. Cela favorise avantageusement la rapidité et la facilité de mise en oeuvre du procédé de contrôle, et le rend facilement répétable. Ce caractère très rapide permet de répéter le cycle d'étapes E1 à E4 autant de fois que nécessaire en cas d'incertitude sur la détermination de la présence ou non d'un défaut 12 et ce de manière très aisée et rapide, et sans aucune altération de la pièce mécanique 10. Ce procédé n'ayant pas de limitation en terme de nombre de répétitions a contrario de celle de « wipe-off » traditionnel en ressuage qui est elle limitée à 2 ou 3 répétitions.

Selon un mode de réalisation, l'étape d'application E1 est mise en oeuvre au moyen d'un dispositif appliquant le produit en phase liquide selon l'une des méthodes suivantes : par projection, par pulvérisation, par dépôt, par trempage. A cet effet, il est donc possible d'utiliser au moins une buse de pulvérisation, ou un pinceau, ou un chiffon imbibé ou un tampon ou un pinceau etc...

Selon un mode de réalisation, l'appareil d'acquisition d'images (il peut s'agir d'images fixes ou d'un flux vidéo) est choisi parmi une loupe binoculaire, un endoscope, un appareil photographique numérique, une caméra, un téléphone. Autrement dit, l'appareil d'acquisition est avantageusement choisi parmi des dispositifs existants, impliquant que le procédé de contrôle ne nécessite pas le développement d'un appareil d'acquisition d'images spécifiques.

Il est maintenant expliqué le principe général en lien avec les figures 3 et 4 en prenant l'hypothèse que le produit en phase liquide est appliqué à l'étape E1 sur la face repérée 18 qui est opposée à la face repérée 16 où est réalisé le contrôle optique à l'étape E2.

L'instant t0 correspond à l'instant où débute la durée de contrôle Δt tandis que l'instant t3 correspond à l'instant où la durée de contrôle Δt se termine. L'instant t0 peut être simultané avec l'instant où est mise en oeuvre l'étape d'application E1 du produit en phase liquide (par exemple l'acétone), ou bien être très légèrement postérieur d'une durée la plus courte possible, idéalement de moins d'une seconde.

Sur la figure 2, l'évolution du contraste K, qui est une caractéristique de l'apparence optique de la zone de contrôle Z, dans le temps t présente une allure de gaussienne. Entre l'instant t0 et un instant t1, le contraste K croit mais reste assez faible. Entre l'instant t1 et l'instant t2, le contraste K croit jusqu'à une valeur maximale puis décroit. Entre l'instant t2 et l'instant t3, le contraste K décroit tout en étant assez faible.

De manière générale, le contraste K pris entre les instants t0 et t1 sur la figure 2 correspond à l'évolution suivante : dans la zone de contrôle Z, la zone interne au défaut 12 est initialement vide de produit en phase liquide, de même que dans les zones à l'extérieur du défaut 12. Le contraste K est alors très faible. Puis, la zone interne au défaut 12, qui est traversant, commence à se remplir de plus en plus en produit en phase liquide (celui-ci provenant de la face opposée et ayant parcouru l'épaisseur locale de la pièce). Au fur et à mesure que la zone interne au défaut 12 se remplit à partir de l'instant t₁ (et que dans le même temps la zone externe au défaut 12 reste sans produit en phase liquide) au moins partiellement en produit en phase liquide précédemment appliqué à l'étape E1, le contraste K augmente progressivement.

Le contraste K pris entre les instants t1 et t2 sur la figure 2 correspond à la situation schématisée sur la figure 3 : dans la zone de contrôle Z, il arrive très rapidement une situation où le produit en phase liquide est complètement absent de la zone à l'extérieur du défaut 12 (c'est la raison de l'absence des hachures à l'extérieur du défaut 12) tandis que du produit en phase liquide est présent dans la zone interne au défaut 12 (c'est la raison de la présence des hachures à l'intérieur du défaut 12). Cette présence différentielle du produit en phase liquide entre l'extérieur et à l'intérieur du défaut 12 implique une forte croissance du contraste K jusqu'à une valeur maximale, le contraste K évoluant ensuite de manière décroissante au fur et à mesure que le produit en phase liquide présent dans le défaut 12 a tendance à s'évaporer.

Enfin, le contraste K pris entre les instants t2 et t3 sur la figure 2 correspond à la situation schématisée sur la figure 4 : dans la zone de contrôle Z, la zone à l'extérieur du défaut 12 reste dépourvue de produit en phase liquide et dans le même temps la zone interne au défaut 12 est de moins en moins remplie de produit en phase liquide au fur et à mesure de son évaporation, jusqu'à évaporation complète (c'est la raison pour laquelle sur la figure 4 la zone interne au défaut 12 est dépourvue de hachures). Cette diminution de la présence différentielle de produit en phase liquide dans toute la zone de contrôle Z implique que le contraste K est assez faible, tout en étant décroissant au fur et à mesure que le produit en phase liquide s'évapore. A l'instant t3, la totalité du produit en phase liquide précédemment appliqué à l'étape E1 a été évaporé, à l'extérieur et à l'intérieur du défaut 12.

L'étape E4 est par exemple mise en oeuvre si le résultat de la mise en oeuvre de l'étape d'analyse E3 montre que durant la durée de contrôle, notamment entre les instants t1 et t2, le contraste K prend à moment donné une valeur supérieure à un seuil prédéterminé, par exemple égale à 0.5.

Selon un mode de réalisation, le procédé de contrôle comprend, préalablement à l'étape d'application E1, une étape de fourniture de la pièce mécanique 10 dans laquelle la pièce mécanique 10 appartient à une turbomachine et comprend un défaut 12 débouchant préalablement identifié, et le cycle incluant l'étape d'application E1, l'étape de contrôle optique E2 et l'étape d'analyse E3 est répété périodiquement afin de surveiller dans le temps la propagation dudit défaut 12 débouchant au sein de la pièce mécanique 10.

Il peut s'agir d'une turbomachine appartenant à un banc d'essai fixe ou montée sur un aéronef en service (sur flotte). Il résulte des dispositions précédentes qu'il est possible, de manière simple, rapide, économique et fiable, de surveiller l'évolution (la propagation) dans le temps d'un défaut débouchant (par exemple une fissure, l'endommagement par fissuration étant une cause connue d'endommagement de moteurs d'aéronefs) déjà présent sur la turbomachine, afin de vérifier que la turbomachine peut continuer à être utilisée en toute sécurité. Cela est avantageux de mettre en oeuvre un tel suivi de l'endommagement par fissuration car il peut être réalisé in-situ (c'est-à-dire sans démontage) et comprendre de multiples pièces mécaniques à évaluer : par exemple une roue de turbine (ayant 50 pales ou plus), des distributeurs, etc... La précision d'évaluation par la mise en oeuvre du présent procédé de contrôle permet de quantifier dans une certaine mesure la dimension de la fissuration présente par la visualisation de sa zone débouchante en surface et qui « ressue » le produit en phase liquide. Et pour résumer, les observations périodiques renseigneront sur son évolution.

Ainsi le procédé de contrôle peut être envisagé pour des applications suivantes :
- durant des phases de recherche, de développement, voire d'industrialisation, pour valider une étape de mise au point et pas seulement pour obtenir un produit livrable ou pour un client utilisateur,
- lors des étapes d'élaboration et de conception, ou dans des étapes de fabrication et de production de produits neufs livrables,
- ou encore durant toute phase nécessaire pendant la vie du produit, c'est-à-dire lors d'un suivi du produit en service.

Le procédé de contrôle peut être utilisé pour un tel suivi sur une turbomachine ou sur une pièce isolée, ou bien sur une turbomachine en service (à tout niveau de maintenance ou de suivi sur champ ou en atelier (niveau 1 à 4)), et sur tout type de pièce mécanique, statique ou rotative, sous réserve que sa mise en oeuvre soit effectivement réalisable dans les contraintes du cas étudié.

Enfin, il est tout à fait envisageable de coupler le procédé de contrôle précédemment décrit avec d'autres méthodes d'évaluation non destructives susceptibles de renseigner plus précisément sur les dimensions de cette fissuration : par exemple par tomographie, radiographie X, courants de Foucault, etc ... Si besoin, il pourra alors être envisageable de procéder à des calibrages avec ces méthodes pour permettre au suivi de fissuration par mise en oeuvre du procédé de contrôle précédemment décrit d'être éventuellement plus précis.

Ces calibrages devront en revanche être réalisés au préalable d'un contrôle in-situ. En effet, la mise en oeuvre de ces méthodes d'évaluation non destructives (tomographie, radiographie X, courants de Foucault, etc ...) ne peut très souvent pas se faire in-situ.

## Revendications

1. Procédé de contrôle non destructif permettant de détecter au moins un défaut (12) débouchant formant au moins une discontinuité présente en surface d'une pièce mécanique (10) pour aéronef, le procédé comprenant les étapes suivantes :
- application (E1) d'un produit en phase liquide sur la pièce mécanique (10),
- contrôle optique (E2) par un appareil d'acquisition d'images, durant une durée de contrôle (Δt) au cours de laquelle tout ou partie du produit précédemment appliqué s'évapore, d'au moins une zone de contrôle (Z) de la pièce mécanique (10), l'appareil d'acquisition d'images délivrant des données représentatives de l'évolution, durant la durée de contrôle (Δt), de l'apparence optique de la zone de contrôle (Z) surveillée,
- analyse (E3) des données précédemment délivrées par l'appareil d'acquisition d'images, dans lequel durant l'étape d'application (E1), le produit en phase liquide est appliqué sur au moins une portion d'une première face d'au moins une partie à contrôler de la pièce mécanique (10), et dans lequel durant l'étape de contrôle optique (E2), ladite zone de contrôle (Z) appartient à une deuxième face de la partie à contrôler de la pièce mécanique (10),
et dans lequel la première face est distincte de la deuxième face, la première face et la deuxième face étant deux faces opposées de la pièce mécanique (10) au niveau de la partie à contrôler, lesdites deux faces opposées délimitant l'épaisseur (14) de la pièce mécanique (10) dans la partie à contrôler.

2. Procédé de contrôle selon la revendication 1, comprenant une étape de génération (E4) d'une alerte, déclenchée si le résultat de l'étape d'analyse (E3) délivre une information représentative de la suspicion de présence dudit au moins un défaut (12) débouchant présent en surface de la pièce mécanique (10).

3. Procédé de contrôle selon l'une des revendications 1 à 2, dans lequel le produit en phase liquide appliqué est **caractérisé par** une tension superficielle inférieure à 40 mN/m, préférentiellement inférieure à 30 mN/m, et notamment inférieure à 25 mN/m.

4. Procédé de contrôle selon l'une quelconque des revendications 1 à 3, dans lequel le produit en phase liquide appliqué à l'étape d'application (E1) présente un indice d'évaporation Iₑ relatif à l'éther éthylique selon la norme DIN 53170 inférieur à 3.

5. Procédé de contrôle selon l'une quelconque des revendications 1 à 4, dans lequel le produit en phase liquide appliqué à l'étape d'application (E1) présente un indice d'évaporation I_{ab} relatif à l'acétate de butyle selon la norme ASTM D 3539 supérieur à 1.

6. Procédé de contrôle selon l'une quelconque des revendications 1 à 5, dans lequel le produit en phase liquide appliqué à l'étape d'application (E1) est transparent dans le spectre visible.

7. Procédé de contrôle selon l'une quelconque des revendications 1 à 6, dans lequel le produit en phase liquide appliqué à l'étape d'application (E1) comprend une cétone.

8. Procédé de contrôle selon la revendication 7, dans lequel le produit en phase liquide appliqué à l'étape d'application (E1) comprend de l'acétone.

9. Procédé de contrôle selon l'une quelconque des revendications 1 à 8, dans lequel la durée de contrôle (Δt) est comprise entre 0 et 15 secondes, préférentiellement inférieure à 10 secondes, notamment de l'ordre de 7 secondes.

10. Procédé de contrôle selon l'une quelconque des revendications 1 à 9, dans lequel l'étape d'application (E1) est mise en oeuvre au moyen d'un dispositif appliquant le produit en phase liquide selon l'une des méthodes suivantes : par projection, par pulvérisation, par dépôt, par trempage.

11. Procédé de contrôle selon l'une quelconque des revendications 1 à 10, dans lequel l'appareil d'acquisition d'images est choisi parmi une loupe binoculaire, un endoscope, un appareil photographique numérique, une caméra, un téléphone.

12. Procédé de contrôle selon l'une quelconque des revendications 1 à 11, comprenant, préalablement à l'étape d'application (E1), une étape de fourniture de la pièce mécanique (10) dans laquelle la pièce mécanique (10) appartient à une turbomachine et comprend un défaut (12) débouchant préalablement identifié, et dans lequel le cycle incluant l'étape d'application (E1), l'étape de contrôle optique (E2) et l'étape d'analyse (E3) est répété périodiquement afin de surveiller dans le temps la propagation dudit défaut (12) débouchant au sein de la pièce mécanique (10).
